# EUROPEAN PATENT APPLICATION

(11) **EP 2 660 222 A1**
(43) Date of publication of application: **06.11.2013**
(21) Application number: 10861393.6
(22) Date of filing: 30.12.2010
(51) Int. Cl.: C04B 35/18, C04B 38/08, B22C 1/02

(54) **ANTI-VEINING ADDITIVE FOR THE PRODUCTION OF CASTING MOLDS AND CORES**

(71) Applicant: Ask Chemicals España, S.A., 48930 Las Arenas-Guecho (Vizcaya) (ES)
(72) Inventor: PRAT URREIZTIETA, Santiago, E-48930 Las Arenas-Guecho (Vizcaya) (ES); MENDIZÁBAL CASTELLANOS, Marco, Antonio, E-48930 Las Arenas-Guecho (Vizcaya) (ES); PUERTOLLANO ABASCAL, María, José, E-48930 Las Arenas-Guecho (Vizcaya) (ES); REINA RIVERO, Jesús, E-48930 Las Arenas-Guecho (Vizcaya) (ES)
(74) Representative: Carpintero Lopez, Francisco
(86) International application number: PCT/ES2010/070876
(87) International publication number: WO 2012/089856

(57) **Abstract**

The present invention belongs to the field of the additives for molding sands used in the manufacture of casting molds and cores. More specifically, the present invention relates to an additive to prevent veining in the manufacture of metal parts, to a molding sand comprising said additive, to a core or mold prepared from said molding sand and to a metal part prepared by means of using one of said cores or molds.

## Description

### Field of the Invention

The present invention belongs to the field of additives for molding sands used in the manufacture of casting molds and cores. More specifically, the present invention relates to an additive to prevent veining in the manufacture of metal parts, to a molding sand comprising said additive, to a core or mold prepared from said molding sand and to a metal part prepared by means of using one of said cores or molds.

### Background of the Invention

The castings obtained using cores and molds manufactured with molding sands generally have a series of shape defects that must be later machined to obtaining a dimensionally suitable part. These defects occur because the core or mold experiences heating due to the effect of the molten metal which is poured therein, which causes its expansion and, as a consequence, the occurrence of cracks on its surface. The molten metal penetrates into these cracks, thus forming a type of partitions or lamellas on the surface of the part obtained. This unwanted effect is known as veining or "rat tail".

Cores or molds are manufactured today by mixing sands with gas-cured or heat-cured resins, or with self-setting resins, a series of additives intended for improving the features of the final part obtained further being used. Several solutions are known to control or reduce veining.

One of the solutions consists of using iron oxides as an additive in the preparation of molding sands. The iron oxides are intended for minimizing problems created by the expansion of the silica contained in the sands, red, black or yellow iron oxides or iron oxides from Sierra Leone, incorporated into the mixture in percentages ranging between 1 and 3%, being used for that purpose. These oxides act as a fayalite forming factor, such that during the formation of the crack in the core, viscous fayalite fills in the cracks thus minimizing veining. Nevertheless, in addition to not eliminating the veining in many cases, this technique has the drawbacks of the iron oxide reducing the mechanical strength of the core and, furthermore, the formation of fayalite increases the tendency of penetration causing the outer surface of the part obtained to have irregularities which must be later treated.

Patent WO 2009155242 describes an anti-veining additive based on the use of iron oxide to which a glass component has been added. Said glass component forms a molten glass among the grains of sand which increases plasticity, reducing the breakage of the cores and, therefore, the occurrence of veining. The problem again is the reduction of the mechanical strength of the core.

Another existing solution consists of using wood flours and carbon dust as an additive. The wood dust or coal is added to the molding sand in proportions ranging between 1 and 3%. This flour burns during melting, leaving empty cavities distributed throughout the entire volume of the core which allow the expansion of the silica to occur in those cavities without needing to increase their outer size, thereby preventing the occurrence of cracks which cause veining. The main drawback of this technique is that since the flour burns, a large amount of gas is produced which, when diffuse, can lead to dimensional problems in the obtained parts. With additives of this type of additives, the mechanical strength of the cores is likewise reduced.

Patent US 4,735,973 describes the use of titanium oxide additives. The additive is present in a percentage ranging between 0.5 and 5% of the total sand and this additive containing between 15 and 95% titanium oxide. With this technique, thermal expansion occurs, veining being prevented in consequence, the mechanical strength of the cores is maintained and there is no increased gas given off. The drawback of this technique is that the cores obtained have a certain tendency to penetration, the application of paints or other treatments on the surface of the cores obtained being necessary before casting the part.

Other methods for treating veining are described in documents WO02087807, WO2009062074 and WO2009046128. These describe additives having different compositions the common feature of which is that they comprise materials containing lithium oxide and iron oxides.

Another solution for controlling veining in the preparation of metal parts is described in patent EP0891954 and in ES2116245, closely related to the former. The solution of these patents comprises the use of hollow alumina silicate microspheres as an anti-veining additive. EP0891954 describes the use of hollow alumina silicate microspheres which are added to the sand in a percentage by weight of 1 to 30%. The microspheres must contain between 20-35% of alumina. These hollow microspheres prevent the occurrence of cracks in the cores and molds as a result of their capacity to shrink and collapse as a consequence of the heat produced by the molten metal. When they collapse and shrink, the cavity that they leave absorbs the expansion of the silica, preventing or reducing the occurrence of cracks leading to veining. The problem of these hollow microspheres is that when they are used in amounts less than 10% by weight in the sand mixture they do not give optimal results, i.e., they do not always prevent veining to the extent that is required. On the other hand, when using a high percentage of hollow microspheres (above 10%, usually between 20-30%), the problem of veining is solved but cores and molds having worse mechanical characteristics are achieved.

Therefore, there is a need to develop an additive based on hollow alumina silicate microspheres which allows reducing the microsphere content in the molding sand to less than 10% in order to obtain cores and molds having suitable mechanical characteristics but without the effect of preventing veining in the final parts being reduced or affected.

The authors of the invention have discovered that by adding a small amount of a flux to the hollow microspheres, an additive is achieved which allows lowering the amount of microspheres in the sand mixture to less than 10%. This allows obtaining molds and cores having suitable mechanical characteristics but which surprisingly further allow the complete lack of veining in the final metal parts. The use of the additive of the invention also allows obtaining metal parts with a smooth surface or skin.

### Brief Description of the Drawings

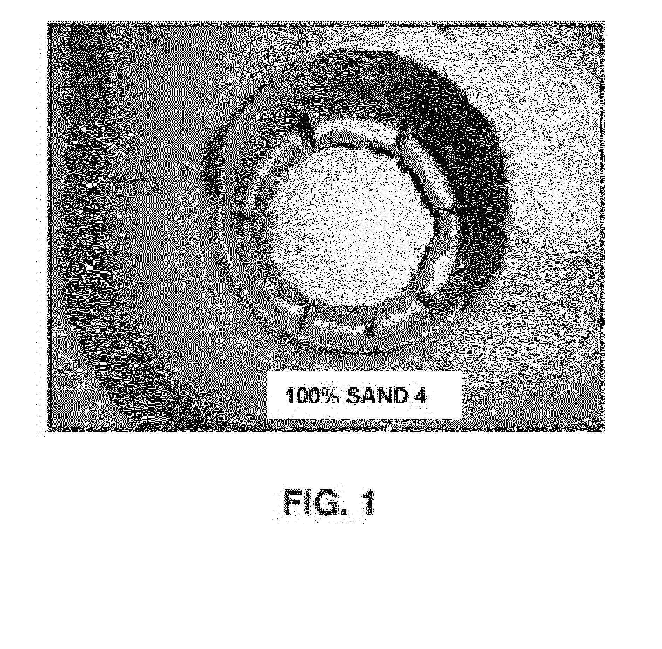

Figure 1 shows an image of a metal part where the veining defect caused by the use of a core made up of 100% sand can be seen.
Figure 2 shows a graph depicting the shrinkage percentage of the different microspheres depending on the temperature. The final shrinkage temperature of each type of microsphere is indicated.
Figure 3 shows a graph depicting the shrinkage percentage of the different microspheres depending on the temperature and in the presence of 6% lithium carbonate and a 6% strontium carbonate.

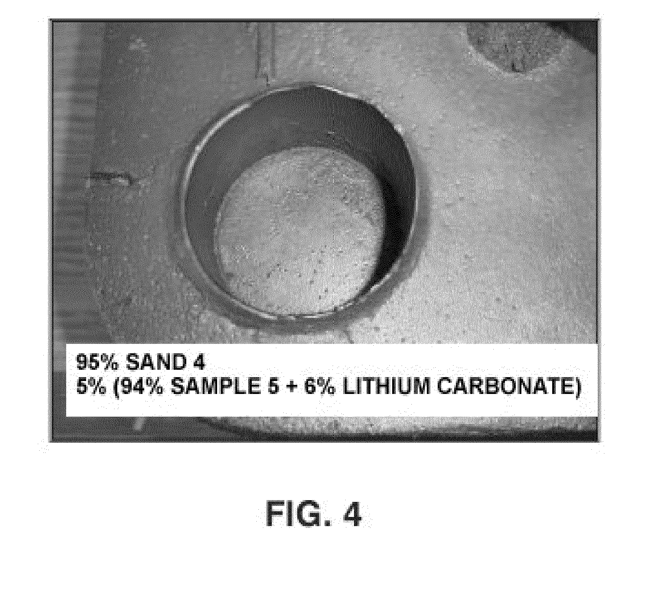

Figure 4 shows an image of a metal part of obtained by means of using a core prepared with the additive of the invention where the absence of veining is seen.
Figure 5 shows a graph depicting gas production during the preparation of a metal part with different cores prepared without additives, with different commercial additives and with the additive of the invention.
Figure 6 shows a graph depicting the tensile strength of the cores with different percentages of the additive of the invention (sample 5 94%+6% CO₃Li₂) upon coming out of the box, at 24 hours and at 24 hours with 100% relative humidity.
Figure 7 shows a graph depicting the abrasion resistance of the cores with different percentages of the additive of the invention (sample 5 94%+6% CO₃Li₂) upon coming out of the box, at 24 hours and at 24 hours with 100% relative humidity.

### Detailed Description of the Invention

The main object of the present invention consists of an additive for molding sands comprising hollow alumina silicate microspheres between 90-99% of the total weight of the additive and a flux between 1-10% of the total weight of the additive. In a particular embodiment, the additive comprises between 94-97% hollow alumina silicate microspheres and between 3-6% flux.

The additive described above (hereinafter additive of the invention) is used mixed with the sands to prepare casting molds and cores. The additive surprisingly reduces the occurrence of cracks in molds and cores during the casting and molding of the metal part, in most cases preventing the occurrence thereof. Veining in the final metal parts is thus prevented.

The hollow alumina silicate microspheres are the first component of the additive of the invention. As previously discussed, these microspheres have the capacity to absorb the expansion of the silica when the core or mold is heated upon contact with the molten metal. Any type of hollow alumina silicate microsphere can be used in the preparation of the additive of the invention, including those with a high alumina content. The microspheres of the additive of the invention can have an alumina content of between 15-45% by weight. The preferred embodiment contemplates the use of microspheres with an alumina content of between 18-40%. The hollow microspheres can contain other minor elements or components in their composition besides alumina silicate such as Fe₂O₃, CaO, MgO, Na₂O, K₂O or TiO₂, which can slightly alter the thermal behavior of the microspheres, but in any case the presence of these elements will not affect the anti-veining capacity of the additive of the invention.

The other component of the additive of the invention is the flux. The inventors have observed that it has the capacity to alter the thermal properties of the microspheres. The flux has the effect of lowering the melting point of the microspheres, making them soften and collapse (break) sooner. This allows optimizing the effect of absorbing the expansion of the sand. The inventors have also observed that the presence of the flux allows working with hollow alumina silicate microspheres of any type. While patent ES2116245 advised against working with microspheres having a high alumina content (35-45%) because they generated veining problems in the final parts, the inventors have demonstrated that the addition of the flux allows using microspheres of any type, including those with a high alumina content, thus broadening the range of microspheres with which the additive can be prepared.

The preferred embodiment of the invention contemplates the use of an alkaline or alkaline-earth element carbonate as a flux. More preferably, said carbonates can be lithium carbonate and/or strontium carbonate.

The use of the additive of the invention has demonstrated that not only does it enable overcoming the veining problem in manufactured metal parts but it also achieves that the surface or skin of said parts lacks roughness.

The additive of the invention is used mixed with sands. Said sands called molding sands are used to prepare casting molds and cores. Another object of the present invention is, therefore, a molding sand comprising between 90% and 99% by weight of sand and between 1-10% by weight of the additive of the invention. The molding sand of the invention preferably comprises between 94-97% of sand and 3-6% of the additive of the invention.

In the context of the invention, any commonly used type of sand can be used in the preparation of casting molds and cores. Particularly, sands for producing casting cores and molds with a silica content greater than 95% and with different grain-size distributions from AFA 40 to AFA 120 can be used.

The molding sand of the invention can also contain other conventional components, such as casting aggregates, binders and other optional components used in this field of the art.

Another object of the invention is the use of the molding sand of the invention for preparing casting molds and cores. More specifically, an object of the present invention is a method for preparing a casting mold or core which comprises:
a) mixing the molding sand of the invention with a binding resin,
b) introducing the mixture of a) in a mold to form a casting core or mold,
c) contacting said casting core or mold with a curing catalyst,
d) separating the core or mold once it has hardened.

Step a) comprises the mixture and homogenization of the molding sand, which includes in its composition the sand and the additive of the invention, with a binding resin. After the resins are cured, they favor the binding and cohesion of the particles and the hardening of the mold or core.

Any type of resin commonly used in the preparation of casting cores and molds can be used in step a). The invention contemplates the use of phenolic-urethane resins gassed with amine; acrylic-epoxy resins gassed with SO₂: phenolic-alkaline resins gassed with methyl formate or CO₂; furan resins, phenol resins, hot-box urea-formol resins or the combinations thereof; hot-box INOTEC inorganic system, or also sands pre-coated with Novolac resins, for example.

Once the molding sand is mixed with the resin, the mixture is introduced in a mold to provide the sand mold or core with the final shape it must adopt. The shape it acquires will determine the shape of the final metal part.

In order for the sand mold or core to be compact, a curing catalyst which accelerates the polymerization of the resin is applied in step c). Any catalyst commonly used in this technical field is suitable for the purposes of the invention, gaseous catalysts such as amines, SO₂, methyl formate or CO₂ are normally used.

Once it is compacted and cured, the sand mold or core is separated from the mold used to give it shape and it is ready for use in the manufacture of the metal part.

Another object of the present invention is a mold or core comprising a molding sand according to the invention, i.e., a molding sand comprising the additive of the invention.

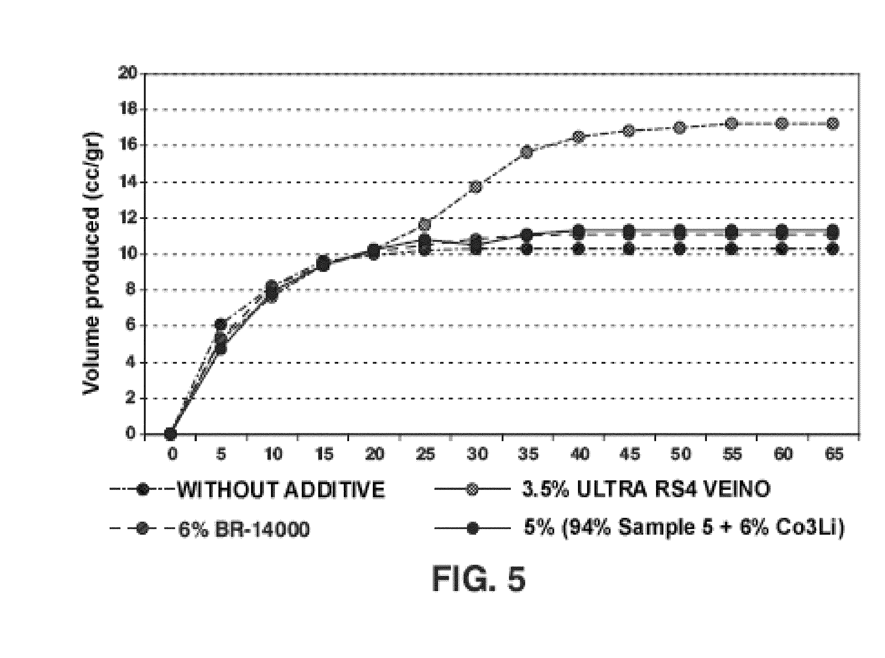

The cores and molds of the invention have a mechanical performance substantially identical to that of the cores and molds produced only with sand but with the advantage that veining is altogether prevented. Another advantage of the cores and molds of the invention resides in the gas given off in the produced part. The amount of gas is not only significantly reduced (see Figure 5) but furthermore gas production stabilizes after 20 minutes similarly to other commercial anti-veining additives.

Another object of the invention is a method for preparing metal castings which comprises:
a) inserting a core or mold according to the invention in a casting device,
b) pouring the metal in liquid state in said device,
c) allowing the metal poured in the casting device to cool and solidify,
d) separating the metal part from the casting device.

The cores or molds of the invention allow obtaining according to the method herein described parts from different metals and/or alloys such as ferric metals, such as grey, nodular cast iron and steel, or non-ferric metals such as copper, bronze and tin.

A final object of the present invention is precisely a metal part obtained according to the previously described method. The metal parts of the invention are free of veining and have a substantially smooth surface or skin, lacking roughnesses. Said metal parts can be of ferric metals such as grey, nodular cast iron and steel or non-ferric metals such as copper, bronze and tin.

The purpose of the following examples is to illustrate the invention but they must not be considered to limit the same:

### Example 1: Thermal analysis of different types of microspheres

The thermal performance of different types of hollow microspheres the composition of which is detailed in the following Table 1, was analyzed:

**Table 1: Composition of the microspheres in % by weight**

| | **Sample 1** | **Sample 2** | **Sample 3** | **Sample 4** | **Sample 5** |
|---|---|---|---|---|---|
| SiO₂ | 55.7 | 67.1 | 59.1 | 58.0 | 55.6 |
| Al₂O₃ | 28.8 | 16.7 | 27.8 | 30.2 | 38.3 |
| Fe₂O₃ | 6.4 | 4.09 | 4.66 | 3.76 | 1.91 |
| CaO | 0.75 | 2.02 | 1.85 | 2.41 | 0.96 |
| MgO | 1.55 | 1.51 | 0.97 | 1.29 | 0.4 |
| Na₂O | 0.43 | 0.9 | 0.58 | 0.21 | 0.35 |
| K₂O | 4.36 | 3.92 | 2.25 | 2.14 | 0.57 |
| TiO₂ | 1.39 | 0.79 | 1.04 | 1.99 | 1.07 |
| PPC | 0.62 | 2.97 | 1.75 | 0 | 0.84 |

The melting test was carried out in a MISURA hot-stage microscope. The hot-stage microscope is an equipment which allows observing a sample when it is subjected to a heating cycle. At the same time it allows recording the outline of the sample throughout the melting test in a data carrier. The evolution of the shrinkage of the sample depending on the temperature was determined from the recorded images by means of image analysis equipment.

A cylindrical button 3 mm in diameter and 3 mm in height was formed with each sample by pressing and was placed on a support. The latter, in turn, was housed in the sample holder of the hot-stage microscope, where it was subjected to a heating cycle with a rate of 25ºC/min up to the maximum temperature of 1550ºC.

The shrinkage-temperature curve, as well as the following characteristic temperatures, were determined from the recorded images:
- Start of shrinkage (TSS), considering as such when the area of the outline of the test piece was 99% of the initial area thereof.
- End of shrinkage (TES), considering as such when the test piece stopped shrinking.
- Softening (TS), considering as such when the edges of the test piece started to become rounded.
- Sphere (TSp), considering as such when the test piece adopted the shape closest to a sphere.
- ½ Sphere (T1/2), considering as such when the test piece adopted the shape closest to a hemisphere.
- Melting (TM), considering as such when the test piece adopted the shape closest to a spherical cap, equivalent to 1/3 the volume of a sphere.

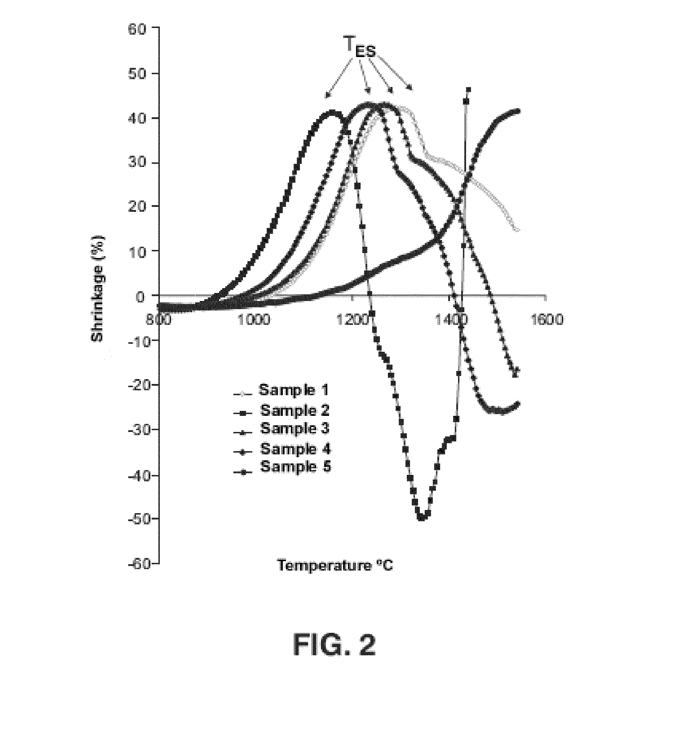

Table 2 and Figure 2 depict the results of the analysis:

**Table 2: Thermal analysis of the microspheres**

| **Characteristic temperature** | **Sample 1** | **Sample 2** | **Sample 3** | **Sample 4** | **Sample 5** |
|---|---|---|---|---|---|
| Start of Shrinkage (Tss) | 1045 | 935 | 1025 | 990 | 1155 |
| End of Shrinkage (T_{ES}) | 1295 | 1160 | 1270 | 1235 | 1550 |
| Softening (T_{S}) | 1340 | 1250 | 1445 | 1355 | ------ |
| Sphere (T_{Sp}) | ------ | 1360 | ------ | ------ | ------ |
| Hemisphere (T_{1/2}) | ------ | 1430 | ------ | ------ | ------ |
| Melting (T_{M}) | ------ | 1435 | ------ | ------ | ------ |

### Example 2: Effect of lithium carbonate and strontium carbonate on the thermal properties of the microspheres.

The thermal performance of the same samples from the Example 1 with the addition of 6% lithium carbonate and 6% strontium carbonate, respectively, was analyzed. The same methodology of analysis as that in claim 1 was used.

The results for the samples to which 6% lithium carbonate was added are represented in the following Table 3:

**Table 3: thermal analysis of the microspheres with lithium carbonate**

| **Mixture** | **100% Sample 5** | **94% Sample 1 + 6% Co₃Li** | **94% Sample 5 + 6% Co₃Li** | **94% Sample 2 + 6% Co₃Li** |
|---|---|---|---|---|
| T Start Shrinkage (TSS) | 1,155 | 1,085 | 1,215 | 890 |
| T End Shrinkage (TES) | 1,550 | 1,210 | 1,320 | 1,035 |
| T Softening (TS) | | 1,240 | 1,350 | 1,155 - 1,170 |
| SPHERE (TSp) | | | | |
| HEMISPHERE (TSp) | | 1,270 | 1,340 - 5 | 1,210 |
| T Melting (TM) | | 1,295 | 1,350 | 1,230 |

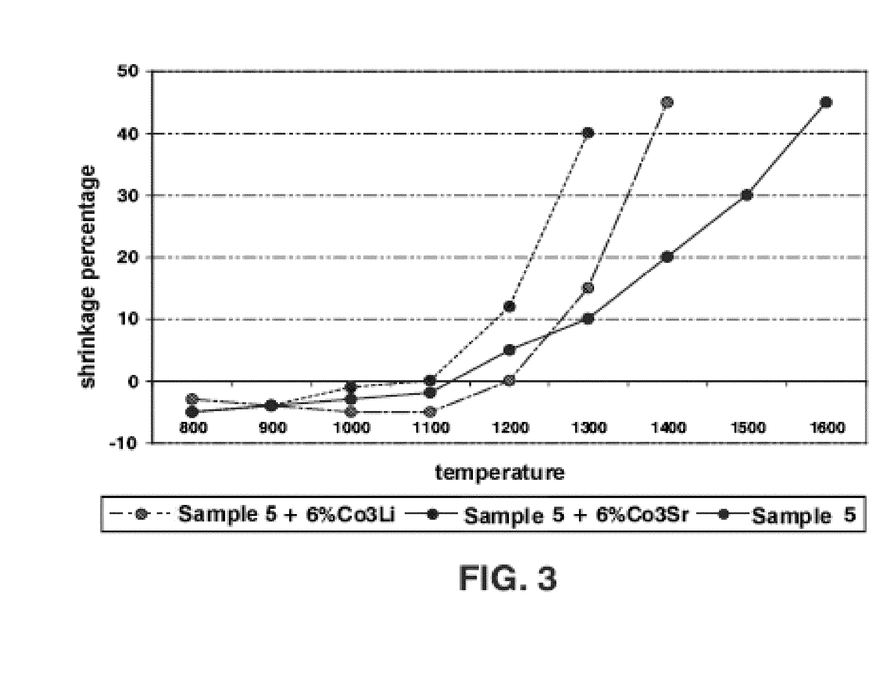

The data relating to sample 5 together with 6% of lithium carbonate and 6% of strontium carbonate are represented both in Table 4 and in Figure 3.

**Table 4**

| | **Sample 5** | **(94% Sample 5 + 6% Co₃Li)** | **(94% Sample 5 + 6% Co₃Sr)** |
|---|---|---|---|
| T Start Shrinkage | 1,115ºC | 1,2155ºC | 1,0955ºC |
| T End Shrinkage | 1,550ºC | 1,320ºC | 1,390ºC |
| T Softening | - - - | 1,335ºC | - - - |
| Melting | - - - | 1,350ºC | - - - |

### Example 3: Preparation of casting cores with different additives and evaluation of the veining and the skin of the resulting parts

Cores were prepared from 94% Echave C-70 sand, 1% ISOCURE FOCUS® 418/618 phenolic-urethane resin, and 5% of the additive (94% of the microsphere sample + 6% Co3Li). The 3 components were mixed in a grinder and the mixture was introduced in the in the hopper of a core shooting machine. The mixture was shot into the core box to obtain the shape of the core and it was gassed with amine. The cured cores were extracted with their final shape.

A veining test was performed and the skin of the metal parts obtained from the use of different additives according to the invention was also observed. The following Table shows the results:

**Table 5**

| **Mixture** | **100% Sample 5** | **94% Sample 1 + 6% Co3Li** | **94% Sample 5 + 6% Co3Li** | **94% Sample 5 + 6% Co3Li** | **94% Sample 2 + 6% Co3Li** | **100% Sand** |
|---|---|---|---|---|---|---|
| Addition to the sand | 10% | 5% | 5% | 3% | 5% | 0% |
| VEINING | 7 | 0 | 0 | 1 | 0 | 10 |
| SKIN | 1 | 0 | 0 | 0 | 0 | 0 |

As can be observed, the use of 6% lithium carbonate as a component of the anti-veining additive provides metal parts without veining, regardless of the microsphere sample used. The parts also have a skin without defects worth reporting.

In contrast, both the parts obtained by molding from cores without an additive (100% sand) or only with microspheres as the additive (100% sample 5) provided considerable veining defects of 10 and 7, respectively (on a veining scale of 0-10).

Both the effect of the dose of lithium carbonate, which is an additive based on microspheres of sample 5, and of the amounts of additive on the composition of the molding sand were later tested. The results are shown in the following table:

**Table 6**

| **TEST PIECE** | **115** | **116** | **46** | **49** | **80** |
|---|---|---|---|---|---|
| **% SAND** | **95%** | **97%** | **95%** | **90%** | **100%** |
| **% ADDITIVE** | **5%** | **3%** | **5%** | **10%** | **0%** |

| **ADDITIVE COMPOSITION** | | | | | |
|---|---|---|---|---|---|
| **CO3Li** | **6%** | **6%** | **0%** | **0%** | **0%** |
| **SAMPLE 5** | **94%** | **94%** | **100%** | **100%** | **0%** |

| **PART RESULTS** | | | | | |
|---|---|---|---|---|---|
| **VEINING** | **0** | **1** | **8** | **7** | **10** |
| **SKIN** | **0** | **0** | **1** | **1** | **0** |

### Example 4: Evaluation of the mechanical characteristics of the cores

A test was carried out to determine the abrasion resistance and the tensile strength of a core obtained from sand and a variable amount of additive (94% of microspheres sample 5+ 6% of lithium carbonate).

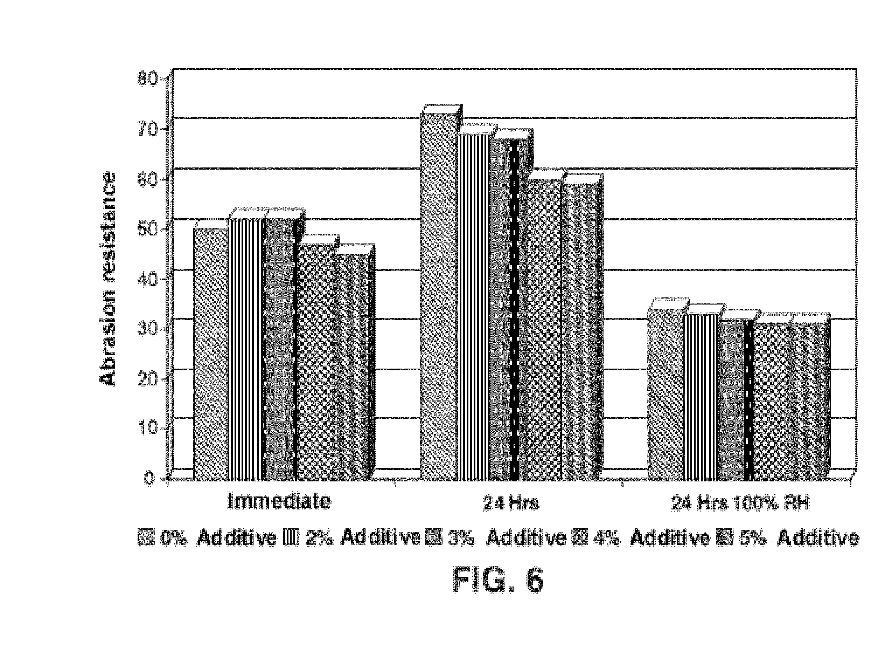

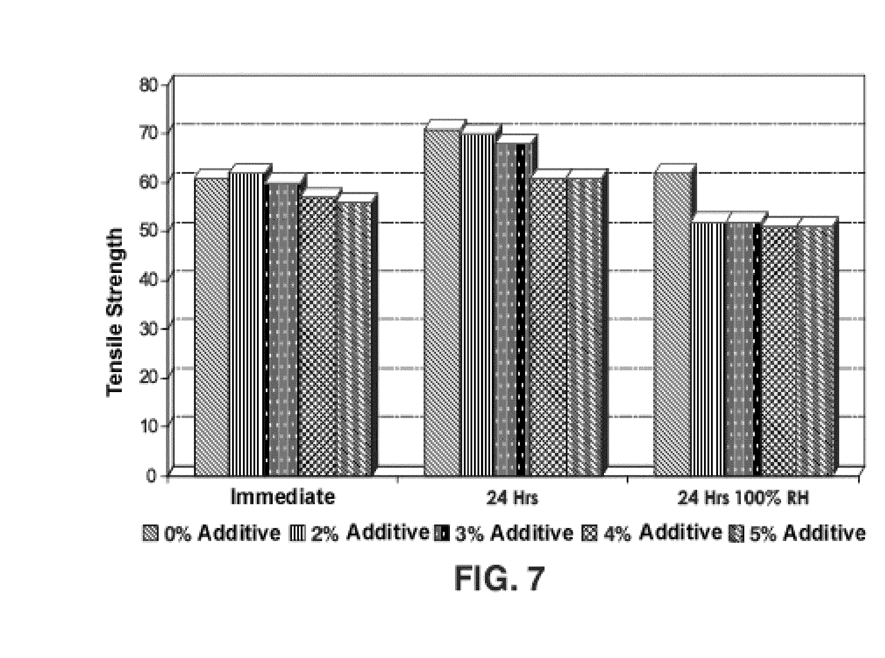

The results of these tests are shown in Figures 6 and 7. As can be seen, the presence of additive does not significantly affect the mechanical characteristics of the cores obtained, resistance to abrasion and tensile strength characteristics similar to those of the control sample without additive being achieved for the different percentages of additive tested.

## Claims

1. Additive for molding sands comprising hollow alumina silicate microspheres between 90-99% of the total weight of the additive and a flux between 1-10% of the total weight of the additive.

2. Additive according to claim 1, wherein the hollow alumina silicate microspheres have an alumina content of between 15-45% by weight.

3. Additive according to claim 1, wherein the flux is an alkaline or alkaline-earth element carbonate.

4. Additive according to claim 3, wherein the alkaline or alkaline-earth element carbonate is a lithium carbonate or a strontium carbonate.

5. Use of an additive according to any of claims 1-4 in the preparation of molding sands.

6. Molding sand comprising between 90% and 99% by weight of sand and between 1-10% by weight of an additive according to any of claims 1-4.

7. A molding sand according to claim 6, wherein the sand is a silica sand with a silica content greater than 95% by weight.

8. Use of a molding sand according to any of claims 6-7 for preparing casting cores and molds.

9. Method for preparing a casting mold or core which comprises:
a) mixing a molding sand according to any of claims 6-7 with a binding resin,
b) introducing the mixture of a) in a mold to form a core or mold,
c) contacting said core or mold with a curing catalyst,
d) separating the core or mold once it has hardened.

10. Casting core or mold comprising a sand according to any of claims 1-6.

11. Method for preparing metal castings which comprises:
a) inserting a core or mold according to claim 10 in a casting device,
b) pouring the metal in liquid state in said device,
c) allowing the metal poured in the casting device to cool and solidify,
d) separating the metal part from the casting device.

12. Method according to claim 11 in that the metal part is made of ferric or non-ferric metals.

13. Method according to claim 12, wherein the ferric metal is grey, nodular cast iron or steel.

14. Method according to claim 12, wherein the non-ferric metal is copper, bronze, tin.

15. Metal part that can be obtained by the method of claim 11.
